## Europäisches Patentamt

## European Patent Office

## Office européen des brevets

(19)

(11) Veröffentlichungsnummer: **0 306 550 B1**

(12) **EUROPÄISCHE PATENTSCHRIFT**

(45) Veröffentlichungstag der Patentschrift: **23.01.91**

(51) Int. Cl.[5]: **A 22 C 25/17**

(21) Anmeldenummer: **87113219.7**

(22) Anmeldetag: **10.09.87**

(54) **Vorrichtung zum Enthäuten von Doppelfilets von Fischen.**

(43) Veröffentlichungstag der Anmeldung:
**15.03.89 Patentblatt 89/11**

(45) Bekanntmachung des Hinweises auf die
Patenterteilung: **23.01.91 Patentblatt 91/04**

(84) Benannte Vertragsstaaten:
**BE ES FR NL SE**

(56) Entgegenhaltungen:
**BE-A- 901 762**
**DE-A-2 949 631**
**DE-B-2 338 984**
**DE-B-3 021 151**

(73) Patentinhaber: **NORDISCHER MASCHINENBAU
RUD. BAADER GMBH + CO KG
Geniner Strasse 249
D-2400 Lübeck (DE)**

(72) Erfinder: **Jürs, Michael
Dornbreite 7
D-2400 Lübeck 1 (DE)**

EP 0 306 550 B1

Courier Press, Leamington Spa, England.

**Beschreibung**

Die Erfindung betrifft eine Vorrichtung zum Enthäuten von Doppelfilets von Fischen, mit z.B. durch Garbehandlung hochempfindlicher Haut, beispielsweise von Kräuterfilets, mit einer die Filets fördernden, umlaufend angetriebenen Mitnehmerwalze mit griffiger Mantelfläche, einem dieser mit einstellbarem Abstand gegenüberliegenden, federnd verdrängbaren Enthäutemesser und einer unterhalb desselben sich erstreckenden Andrückfläche.

Eine für diesen Anwendungszweck vorgesehene Enthäutevorrichtung ist aus der DE—B—30 21 151 bekannt. Bei dieser Vorrichtung ist die mit Enthäutewalze bezeichnete Mitnehmerwalze mit sich längs der Mantellinien erstreckenden Nuten versehen, die durch ein den Umfang der Mitnehmerwalze umfassendes Nutenfeld unterbrochen ist, dessen Nutteilung gegenüber der der übrigen Bereiche der Mantelfläche größer ist.

Das mit dieser Vorrichtung erarbeitete Resultat kann nicht befriedigen, da relativ häufig Störungen auftreten, die sich insbesondere durch wiederkehrende hartnäckige Verstopfungen äußern. Die Ursache dafür liegt in dem zu geringen Fassungsvermögen der Nutenfelder groberer Teilung, so daß der in deren Bereich zu liegen kommende Rückenflossenstreifen aufträgt und die knorpeligen Flossenhalter gegen die Schneide des Enthäutemessers laufen.

Es ist die Aufgabe der Erfindung, diesen Mangel zu beseitigen.

Diese Aufgabe wird erfindungsgemäß dadurch gelöst, daß die Mitnehmerwalze eine Radialnut mit einem in dieser angeordneten Hilfsförderer aufweist, der mit etwa bis zum Außendurchmesser der Mitnehmerwalze aufragenden elastischen Flügeln versehen ist, und daß über der Radialnut und vor der Schneide des Enthäutemessers ein elastischer Niederhalter von etwa der Breite der Radialnut angeordnet ist.

Die Vorteile dieser Ausführungsmerkmale bestehen insbesondere darin, daß sich die Flügel aufgrund ihrer Elastizität durch den Rückenflossenstreifen bedarfsgemäß verdrängen lassen und dank ihrer Rückstellfähigkeit gegen die Schneide des Enthäutemessers in diesem Bereich selbstreinigend wirksam sind. Dabei kann die den Hilfsförderer aufnehmende Radialnut bei einer einbahnigen Ausführung der Vorrichtung in der Mitte der Mitnehmerwalze, für eine zweibahnige in den äußeren Viertelpunkten des Längenmasses der Mitnehmerwalze vorgesehen sein. Eine sicherheitstechnisch beherrschbare und in eine automatische Fischbearbeitungslinie integrierbare Vorrichtung ergibt sich, wenn der Mitnehmerwalze ein mit zu dieser geringerer Umfangsgeschwindigkeit gleichsinnig umlaufender Bandförderer vorgeschaltet ist. Für eine Handbeschickung ist dabei hilfreich, wenn der Bandförderer auf die Radialnuten der Mitnehmerwalze weisende Ausrichtmarkierungen aufweist.

Die Erfindung wird nachfolgend anhand eines in der Zeichnung dargestellten Ausführungsbeispiels näher erläutert. Es zeigt

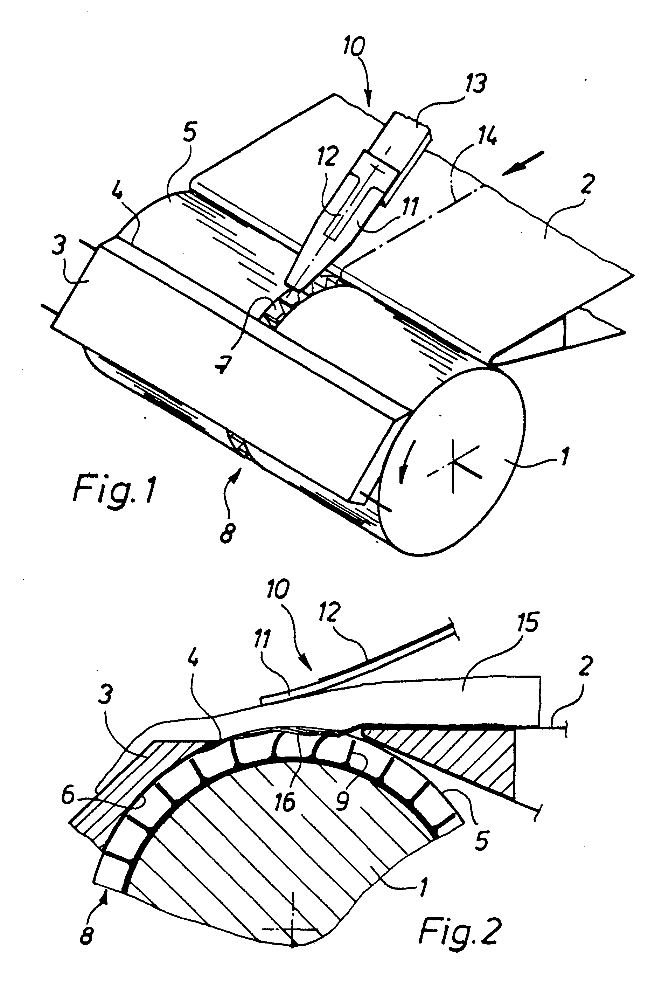

Fig. 1 eine ausschnittweise Ansicht der Enthäutevorrichtung in axonometrischer und vereinfachter Darstellung,

Fig. 2 einen Querschnitt durch die Enthäutevorrichtung im Bereich des erfindungsgemäßen Hilfsförderers.

In einem nicht dargestellten Maschinengestell einer Enthäutemaschine ist nach bekannter Anordnung eine Mitnehmerwalze 1 gelagert und auf geeignete Weise umlaufend angetrieben. Dieser ist ein Zuführband 2 aus einem flexiblen Werkstoff vorgelagert, welches als fördernde Auflage für die zu bearbeitenden Doppelfilets dient und diese etwa tangential an die Mitnehmerwalze 1 heranführt. Der letzteren ist auf der ablaufenden Seite ein Enthäutemesser 3 zugeordnet, welches mit seiner Schneide 4 parallel zu der Achse der Mitnehmerwalze 1 und in unmittelbarer Nähe zu deren Mantelfläche 5 angeordnet ist. Unmittelbar unterhalb der Schneide 4 schließt sich eine konkave Andrückfläche 6 an, deren Krümmungsradius dem der Mantelfläche 5 der Mitnehmerwalze 1 im wesentlichen entspricht. Das Enthäutemesser 3 und die Andrückfläche 6 sind gegen leichte Federkraft von der Mantelfläche 5 der Mitnehmerwalze 1 weg verdrängbar. Die Schneide 4 des Enthäutemessers 3 kann mit einer Innenfase von einigen Zehntel Millimetern ausgestattet sein. Die Mantelfläche 5 ist mit längs ihrer Mantellinien sich erstreckenden Nuten feiner Teilung, beispielsweise 1,7 mm versehen. Sie werden durch eine in der Mitte des Langmasses der Mitnehmerwalze 1 befindliche Radialnut 7 unterbrochen, die einen etwa quadratischen Querschnitt von etwa acht mal acht Millimeter aufweisen kann. In die Radialnut 7 ist ein Hilfsförderer 8 in Form eines Mitnehmerkranzes, beispielsweise aus einem Elastomer mit der Mitnehmerwalze 1 mitdrehend eingelagert, der mit radial vom Grunde der Radialnut 7 aufragenden elastischen Flügeln 9 einer Teilung versehen ist, die etwa dem Tiefenmaß der Radialnut 7 entspricht. Die äußere Kante der Flügel 9 liegt dabei auf einem Durchmessermaß, das dem der Mitnehmerwalze 1 maximal entspricht. Oberhalb der letztgenannten ist über der Radialnut 7 ein etwa deren Breite aufweisender Niederhalter 10, beispielsweise aus einer Gummizunge 11 angeordnet, welcher auf seiner Oberseite durch ein Federblatt 12 abgestützt an einem nur angedeutet gezeigten, einstellbar federnd niedergehaltenen Schwenkarm 13 befestigt ist.

Die Funktionsweise der Vorrichtung ist folgende:

Das zu enthäutende Doppelfilet 15 wird mit der Haut nach unten und vorzugsweise mit dem Schwanzende voraus so auf das Zuführband 2 aufgelegt, daß der Rückenflossenstreifen 16 auf die Ausrichtmarkierung 14 zu liegen kommt. Aufgrund der Förderbewegung des Zuführbandes 2 erreicht das Doppelfilet 15 die Mitnehmerwalze 1, wobei sein Rückenflossenstreifen 16 deren Mantelfläche 5 im Bereich der Radialnut 7 trifft. Dabei übernehmen in diesem Bereich die Flügel 9 des Hilfsförderers 8 die Stützung des Doppelfilets 15, während der darüber angeordnete Niederhalter 10 für eine Einlagerung der Rückenflossen in der Radialnut 7 unter bedarfsgemäßer Verdrängung der Flügel 9 sorgt. Auf diese Weise gelangt das vorauslaufende Ende des Doppelfilets 15 mit seiner Haut und dem Rückenflossenstreifen 16 sicher unter die Schneide 4 des Enthäutemessers 3. Der damit eingeleitete Enthäuteprozeß breitet sich nunmehr in die die Flankenteile der Doppelfilets 15 tragenden Bereiche der Mantelfläche 5 aus, wobei die Förderung durch Andruck der Haut an die griffige Mantelfläche 5 der Mitnehmerwalze 1 vermittels der Andrückfläche 6 erfolgt.

**Patentansprüche**

1. Vorrichtung zum Enthäuten von Doppelfilets von Fischen mit z.B. durch Garbehandlung hochempfindlicher Haut, beispielsweise von Kräuterfilets, mit einer die Filets fördernden, umlaufend angetriebenen Mitnehmerwalze (1) mit griffiger Mantelfläche (5), einem dieser mit einstellbarem Abstand gegenüberliegenden, federnd verdrängbaren Enthäutemesser (3) und einer unterhalb des Enthäutemessers (3) sich erstreckenden Andrückfläche (6), dadurch gekennzeichnet, daß die Mitnehmerwalze (1) eine Radialnut (7) mit einem in dieser angeordneten Hilfsförderer (8) aufweist, der mit etwa bis zum Außendurchmesser der Mitnehmerwalze (1) aufragenden elastischen Flügeln (9) versehen ist, und daß über der Radialnut (7) und vor der Schneide (4) des Enthäutemessers (3) ein elastischer Niederhalter (10) von etwa der Breite der Radialnut (7) angeordnet ist.

2. Vorrichtung nach Anspruch 1, dadurch gekennzeichnet, daß die den Hilfsförderer (8) aufnehmende Radialnut (7) in der Mitte der Mitnehmerwalze (1) angeordnet ist und eine Breite von fünf bis zwölf, vorzugsweise acht, Millimeter aufweist.

3. Vorrichtung nach Anspruch 1 oder 2, dadurch gekennzeichnet, daß jeweils je eine, einen Hilfsförderer (8) aufnehmende Radialnut (7) in den äußeren Viertelpunkten des Längenmasses der Mitnehmerwalze (1) vorgesehen ist.

4. Vorrichtung nach Anspruch 1, dadurch gekennzeichnet, daß der Mitnehmerwalze (1) ein mit zu dieser mit geringerer Umfangsgeschwindigkeit gleichsinnig umlaufender Bandförderer (2) vorgeschaltet ist.

5. Vorrichtung nach Anspruch 4, dadurch gekennzeichnet, daß der Bandförderer (2) auf die Radialnuten (7) der Mitnehmerwalze (1) weisende Ausrichtmarkierungen (14) aufweist.

**Revendications**

1. Dispositif pour enlever la peau des filets doubles de poissons possédant une peau très sensible par exemple au traitement par cuisson, par exemple des filets aux herbes, dispositif comportant un cylindre-entraîneur (1) avec une surface-enveloppe adhérente (5), destiné à faire avancer les filets et entraîné en rotation, un couteau (3) pour enlever la peau, agencé en regard du cylindre à une distance réglable et pouvant être repoussé élastiquement de celui-ci, ainsi qu'une surface d'application (6) s'étendant en dessous du couteau (3) cité, caractérisé en ce que le cylindre-entraîneur (1) comporte une rainure radiale (7) avec un transporteur auxiliaire (8) logé dans celle-ci et pourvu d'ailettes élastiques (9) se dressant, en saillie, sensiblement jusqu'au diamètre extérieur du cylindre-entraîneur (1), et en ce qu'un applicateur élastique (10) de largeur sensiblement égale à celle de la rainure radiale (7) est agencé au-dessus de la rainure radiale (7) et en avant de l'arête de coupe (4) du couteau (3) à enlever la peau.

2. Dispositif selon la revendication 1, caractérisé en ce que la rainure radiale (7) logeant le transporteur auxiliaire (8) est agencée au milieu du cylindre-entraîneur (1), et présente une largeur de cinq à douze, de préférence de huit millimètres.

3. Dispositif selon la revendication 1 ou 2, caractérisé en ce qu'il est prévu, au niveau de chacun des points situés à une distance des extrémités du cylindre-entraîneur (1), égale au quart de la longueur du cylindre-entraîneur, une rainure radiale (7) logeant chacune un transporteur auxiliaire (8).

4. Dispositif selon la revendication 1, caractérisé en ce qu'en amont du cylindre-entraîneur (1) est agencé un transporteur à bande (2) tournant dans le même sens que le cylindre-entraîneur (1), mais à une vitesse périphérique plus faible.

5. Dispositif selon la revendication 4, caractérisé en ce que le transporteur à bande (2) présente des repères de positionnement (14) dirigés vers les rainures radiales (7).

**Claims**

1. Apparatus for skinning double fillets of fish, with e.g. a skin made highly sensitive due to cooking, for example herb-seasoned fillets, with a fillet-conveying driving roller (1) driven in rotary manner with a gripping circumferential surface (5), a resiliently displaceable skinning knife (3) facing same with an adjustable spacing and a pressing surface (6) extending below the same, characterized in that the driving roller (1) has a radial slot (7) with an auxiliary conveyor (8) arranged therein and which is provided with elastic vanes (9) projecting approximately up to the external diameter of the driving roller (1) and that an elastic holding down device (10) roughly of the same width as the radial slot (7) is positioned over the latter and upstream of the cutting edge (4) of the skinning knife (3).

2. Apparatus according to claim 1, characterized in that the radial slot (7) receiving the auxiliary conveyor (8) is positioned in the centre of the driving roller (1) and has a width of 5 to 12 and preferably 8 millimetres.

3. Apparatus according to claims 1 or 2, characterized in that in each case one radial slot (7) receiving an auxiliary conveyor (8) is located in the outer quarter points of the length dimension of the driving roller (1).

4. Apparatus according to claim 1, characterized in that upstream of the driving roller (1) is positioned a belt conveyor (2) revolving in the same direction and at a lower circumferential speed than the driving roller.

5. Apparatus according to claim 4, characterized in that the belt conveyor (2) has line-up marks (14) directed towards the radial slot (7) of the driving roller (1).

Fig.1

Fig.2